**Europäisches Patentamt**

**European Patent Office**

**Office européen des brevets**

(19)

(11) Veröffentlichungsnummer: **0 024 713**
**B1**

# (12) EUROPÄISCHE PATENTSCHRIFT

(45) Veröffentlichungstag der Patentschrift:
**03.07.85**

(21) Anmeldenummer: **80105020.4**

(22) Anmeldetag: **23.08.80**

(51) Int. Cl.⁴: **F 41 H 5/04**

(54) **Verbundplatte zur Panzerung von Fahrzeuginnenräumen od. dgl.**

(30) Priorität: **23.08.79 DE 2934050**

(43) Veröffentlichungstag der Anmeldung:
**11.03.81 Patentblatt 81/10**

(45) Bekanntmachung des Hinweises auf die Patenterteilung:
**03.07.85 Patentblatt 85/27**

(84) Benannte Vertragsstaaten:
**AT BE CH FR GB LI NL SE**

(56) Entgegenhaltungen:
**BE - A - 687 116**
**DE - A - 2 201 637**
**FR - A - 1 104 090**
**GB - A - 554 856**
**GB - A - 1 142 689**
**US - A - 3 395 067**
**US - A - 3 813 281**

(73) Patentinhaber: **Thiele & Co., Beim Struckenberge 11,**
**D-2800 Bremen 21 (DE)**

(72) Erfinder: **Thiele, Wilhelm, Beim Struckenberge 11,**
**D-2800 Bremen 21 (DE)**
Erfinder: **Meyer, Hugo, Ahauser Strasse 20,**
**D-2803 Weyhe-Ahausen (DE)**

(74) Vertreter: **Eisenführ & Speiser, Martinistrasse 24,**
**D-2800 Bremen 1 (DE)**

## Beschreibung

Die Erfindung betrifft eine Verbundplatte zur Panzerung von Fahrzeuginnenräumen o.dgl., bestehend aus einer äusseren, zwischen zwei GFK-Schichten eingebetteten harten Panzerplatte, einer Zwischenschicht und einer inneren, weicheren zweiten Panzerplatte.

Eine derartige Verbundplatte ist in der GB-A-1 142 689 beschrieben. Sie soll Schutz gegen Beschuss bieten und dabei möglichst leicht sein. Diese Verbundplatten können zur Panzerung von Fahrzeuginnenräumen benutzt werden, um dort befindliche Personen vor Beschuss zu schützen. Hierzu werden die Verbundplatten innenseitig an der Karosserie der Fahrzeuge angebracht, so dass sie das Aussehen der Fahrzeuge nicht beeinträchtigen, gleichwohl aber einen sicheren Personenschutz bieten. Soweit es sich bei den Fahrzeugen um Personenwagen oder leichte Transportfahrzeuge handelt ist es wesentlich, dass das Fahrzeuggewicht durch die Verbundplatten nur in Grenzen erhöht wird. Diesem Ziel dient es natürlich, wenn die Verbundplatte selbsttragende Eigenschaften aufweist und die Aussenhaut der Karosserie bilden kann.

Mindestens eine der in der GB-A-1 142 689 beschriebenen Ausführungsformen der dortigen Verbundplatte ist selbsttragend und kann deshalb zur Herstellung der Aussenhaut einer Karosserie verwendet werden.

Der Grundgedanke der Verbundplatte dieses Standes der Technik besteht darin, die die äussere Panzerplatte bildenden Abschnitte voneinander und von der inneren Panzerplatte schwingungstechnisch zu isolieren. Bei einem Beschuss mit Weichkern-Munition kann davon ausgegangen werden, dass diese bekannte Verbundplatte eine hinreichende Beschusssicherheit gibt. Gegen ihre Verwendung als Schutz gegen heute übliche Munitionsarten bestehen dagegen Bedenken.

Aus der BE-A-687 116 ist eine Panzerung bekannt, die beiderseits eines dicken Kernes aus unter Hochdruck zusammengepressten Glasfasern je eine Stahlplatte aufweist, von denen die der Beschussrichtung zugekehrte Stahlplatte aus vergleichsweise hartem und die andere Stahlplatte aus vergleichsweise weichem Material besteht. Die Aussenseiten der Stahlplatten sind durch je eine Schicht aus glasfaserverstärktem Kunststoff (GFK-Schicht) abgedeckt. Alle diese Schichten sind flächig miteinander verbunden. Diese bekannte Panzerplatte dient ebenfalls zur Sicherung gegen Weichkern-Munition und bietet hier einen ausreichenden Schutz. Aufgrund der verwendeten Materialien und der Materialdicken hat sie ein hohes Gewicht und ist deshalb für den Einsatz im allgemeinen Fahrzeugbau schwerlich zu verwenden.

Ein flexibles Panzerelement zeigt die US-A-3 813 281, das ebenfalls aus mehreren flächig miteinander verbundenen Schichten besteht. Für den Fahrzeugbau ist ein solches Panzerelement aber ungeeignet, denn einerseits benötigen die flexiblen Elemente dieses bekannten Schichtaufbaus erfahrungsgemäss zur Erlangung einer ausreichenden Beschusssicherheit eine Stützmasse, die bei beschusssicheren Westen von dem zu schützenden Körper gebildet wird, die aber im Fahrzeugbau unter zusätzlicher Gewichtserhöhung zusätzlich vorgesehen werden müsste.

Andererseits ist dieses bekannte Panzerelement nicht selbsttragend, wodurch sich zusätzliche Nachteile im Fahrzeugbau ergeben.

Aufgabe dieser Erfindung ist es daher, eine Verbundplatte der eingangs genannten Art so auszubilden, dass ihre Beschusssicherheit den heute üblichen Munitionsarten und -energien besser gewachsen ist, ihre Gewichtszunahme jedoch auf ein Minimum beschränkt wird, um für den Fahrzeugbau einsetzbar zu bleiben.

Diese Aufgabe wird bei einer Verbundplatte zur Panzerung von Fahrzeuginnenräumen o.dgl., bestehend aus einer äusseren, zwischen zwei GFK-Schichten eingebetteten harten Panzerplatte, einer Zwischenschicht und einer inneren, weicheren zweiten Panzerplatte erfindungsgemäss dadurch gelöst, dass die äussere Panzerplatte als durchgehende Platte ausgebildet oder von aneinanderstossenden Plattenabschnitten gebildet ist und dass die Zwischenschicht der Kern einer Sandwichplatte ist, die auf ihrer einen Seite von der einen, die äussere Panzerplatte einbettende GFK-Schicht und auf ihrer anderen Seite von einer zusätzlichen GFK-Schicht begrenzt ist.

Mit dieser Lösung erhält man eine nach wie vor leichte Verbundplatte mit selbsttragenden Eigenschaften, insbesondere zur Herstellung von Fahrzeugaufbauten mit der angestrebten deutlich erhöhten Beschusssicherheit. Sie liegt höher als bei einer Verbundplatte der eingangs genannten Art, und es hat sich darüber hinaus gezeigt, dass die erfindungsgemässe Lösung sogar Sicherheit gegen Hartkern-(SMK-)-Munition bietet.

Bevorzugte Ausgestaltungen und Weiterbildungen der erfindungsgemässen Lösung sind in den Unteransprüchen angegeben.

Im folgenden wird eine Ausführungsform der Erfindung anhand der Zeichnung beispielshalber näher erläutert.

Es zeigen:

Fig. 1 eine Aufsicht auf einen Ausschnitt der erfindungsgemässen Platte, wobei die Plattenabschnitte der zweiten Panzerschicht gestrichelt dargestellt sind; und

Fig. 2 einen Querschnitt längs der Linie A–A der Fig. 1.

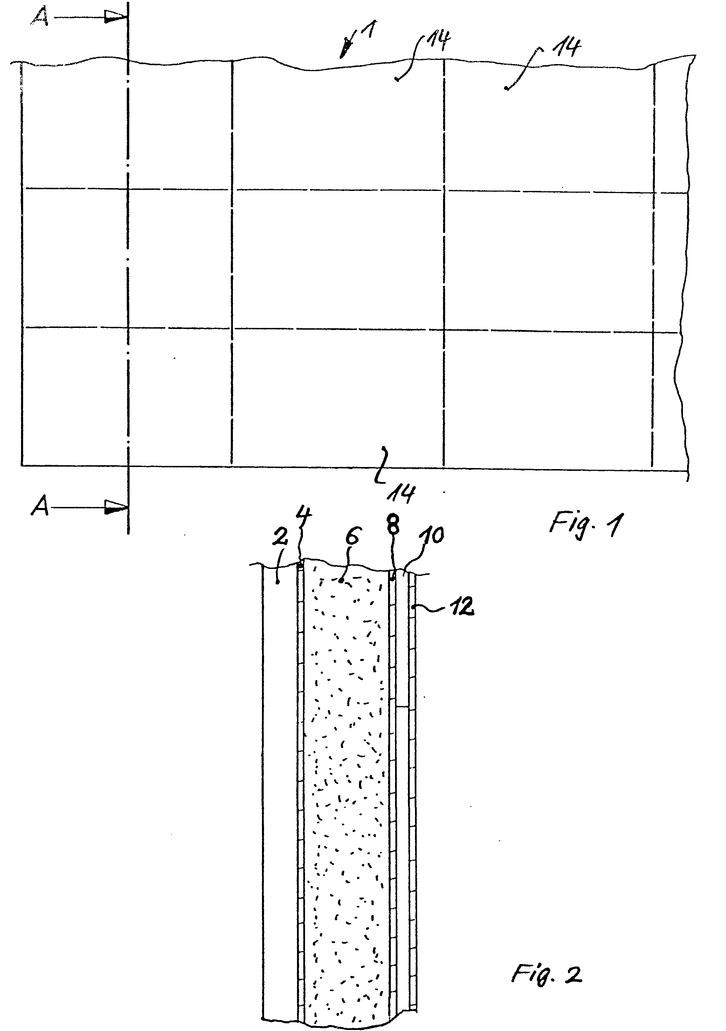

Fig. 1 zeigt eine Aufsicht auf einen Ausschnitt der erfindungsgemässen Verbundplatte 1. Einzelne Plattenabschnitte 14 der zweiten Panzerplatte 10 sind in einer Ebene nebeneinander angeordnet und gestrichelt dargestellt.

Fig. 2 zeigt einen Schnitt längs der Linie A–A der Fig. 1. Die Verbundplatte 1 besitzt eine innenliegende erste Panzerplatte 2, z.B. aus Stahl mit einer Dicke von 8 mm. An eine Seite der Panzerplatte 2 grenzt eine erste Zwischenschicht 4 aus glasfaserverstärktem Kunststoff an. Anschliessend an die erste Zwischenschicht 4 folgt eine relativ dicke Füllschicht 6 aus Hartschaummaterial.

An die Füllschicht 6 aus Hartschaummaterial schliesst sich erfindungsgemäss eine zweite Zwischenschicht 8 aus glasfaserverstärktem Kunststoff an, und an die zweite Zwischenschicht 8 schliesst sich eine zweite Panzerplatte 10 an, die mit einer Aussenschicht 12 aus glasfaserverstärktem Kunststoffmaterial überzogen ist, so dass die zweite Panzerplatte 10 zwischen zwei glasfaserverstärkten Kunststoffschichten zu liegen kommt und ein integraler Bestandteil der Verbundplatte ist.

Die zweite Panzerplatte 10 besteht aus nebeneinander in einer Ebene angeordneten Plattenabschnitten 14, vgl. Fig. 1, und besitzt z.B. eine Dicke im Bereich von 1 bis 3 mm. Bevorzugt wird für die zweite Panzerplatte Stahlmaterial mit einer sehr grossen Rockwellhärte verwendet.

Mittels der zweiten Zwischenschichten 4 und 8 sowie der Aussenschicht 12 aus glasfaserverstärktem Kunststoff werden die erste Panzerplatte 2 und die zweite Panzerplatte 10 sowie die innere Füllschicht 6 flächig zu einem Verbund lamelliert, woraus die überraschend hohe Durchschlagsfestigkeit resultiert.

Anstelle von glasfaserverstärktem Kunststoff kann auch auf andere Weise – z.B. durch Kohlenstoff-Fasern – verstärkter Kunststoff verwendet werden.

## Patentansprüche

1. Verbundplatte zur Panzerung von Fahrzeuginnenräumen o.dgl., bestehend aus einer äusseren, zwischen zwei GFK-Schichten (8, 12) eingebetteten harten Panzerplatte (10), einer Zwischenschicht (6) und einer inneren, weicheren zweiten Panzerplatte (2), dadurch gekennzeichnet, dass die äussere Panzerplatte (10) als durchgehende Platte ausgebildet oder von aneinanderstossenden Plattenabschnitten gebildet ist und dass die Zwischenschicht (6) der Kern einer Sandwichplatte ist, die auf ihrer einen Seite von der einen, äussere Panzerplatte einbettende GFK-Schicht (8) und auf ihrer anderen Seite von einer zusätzlichen GFK-Schicht (4) begrenzt ist.

2. Verbundplatte nach Anspruch 1, dadurch gekennzeichnet, dass die äussere Panzerplatte (10) dünner ist als die innere Panzerplatte (2).

3. Verbundplatte nach Anspruch 1 oder 2, dadurch gekennzeichnet, dass der Kern (6) der Sandwichplatte aus Hartschaumstoff besteht.

4. Verbundplatte nach Anspruch 1 oder 2, dadurch gekennzeichnet, dass der Kern (6) der Sandwichplatte aus Holz besteht.

## Claims

1. Bonded panel for armouring vehicle interiors or the like, consisting of an outer rigid armouring panel (10) embedded between two layers (8, 12) of glass fibre reinforced plastics material, an intermediate layer (6) and an inner, softer second armouring panel (2), characterised in that the outer armouring panel (10) is constructed as a continuous panel or is constituted by abutting panel portions and in that the intermediate layer (6) is the core of a sandwich panel bounded on one side by one layer (8) of glass fibre reinforced plastics material embedding the outer armouring panel and on its other side by an additional layer (4) of glass fibre reinforced plastics material.

2. Bonded panel according to Claim 1, characterised in that the outer armouring panel (10) is thinner than the inner armouring panel (2).

3. Bonded panel according to Claim 1 or 2, characterised in that the core (6) of the sandwich panel consists of rigid foam material.

4. Bonded panel according to Claim 1 or 2, characterised in that the core (6) of the sandwich panel consists of wood.

## Revendications

1. Plaque à structure stratifiée pour le blindage d'intérieurs de véhicules ou analogues, consistant en une plaque extérieure de blindage (10) de grande dureté, insérée entre deux feuilles (8, 12) en matière plastique renforcée par fibre de verre, une feuille de remplissage (6), et une seconde plaque de blindage (2) intérieure de dureté inférieure, caractérisée en ce que la plaque de blindage extérieure (10) est formée en une seule pièce ou à partir d'éléments de plaques jointifs, et en ce que la feuille de remplissage (6) constitue le noyau d'un panneau sandwich, bordé sur l'une de ces faces par l'une (8) des feuilles en matière plastique renforcée par fibre de verre enrobant la plaque de blindage extérieure, et sur son autre face, par une plaque (4) complémentaire en matière plastique renforcée par fibre de verre.

2. Plaque à structure stratifiée selon la revendication 1, caractérisée en ce que la plaque de blindage extérieure (10) est plus fine que la plaque de blindage intérieure (2).

3. Plaque à structure stratifiée selon l'une quelconque des revendications 1 et 2, caractérisée en ce que la matière du noyau (6) du panneau sandwich est une mousse rigide.

4. Plaque à structure stratifiée selon l'une quelconque des revendications 1 et 2, caractérisée en ce que la matière du noyau (6) du panneau sandwich est le bois.

Fig. 1

Fig. 2